# EUROPÄISCHE PATENTSCHRIFT

(11) **EP 2 462 670 B1**
(45) Veröffentlichungstag und Bekanntmachung des Hinweises auf die Patenterteilung: **29.04.2020**
(21) Anmeldenummer: 10730688.8
(22) Anmeldetag: 01.06.2010
(51) Int. Cl.: H02H 1/00

(54) **ELEKTRISCHE INSTALLATIONSANORDNUNG**
ELECTRICAL INSTALLATION ARRANGEMENT
CONFIGURATION D'INSTALLATION ÉLECTRIQUE

(30) Priorität: 05.08.2009 AT 12342009
(43) Veröffentlichungstag der Anmeldung: 13.06.2012
(73) Patentinhaber: Eaton Intelligent Power Limited, Dublin 4 (IE)
(72) Erfinder: KOCH, Michael, A-1190 Wien (AT)
(74) Vertreter: Eaton IP Group EMEA
(86) Internationale Anmeldenummer: PCT/AT2010/000193
(87) Internationale Veröffentlichungsnummer: WO 2011/014895

(56) Entgegenhaltungen:
- EP-A1- 1 936 768
- WO-A1-2008/077161
- US-A1- 2006 114 630

## Beschreibung

Die Erfindung betrifft eine elektrische Installationsanordnung zum Betrieb eines elektrischen Verbrauchernetzes gemäß dem Oberbegriff des Patentanspruches 1.

Es sind elektrische Installationsanordnungen bekannt, welche einen Schutz vor Lichtbögen aufweisen, und bei Auftreten eines Lichtbogens einen Verbraucher bzw. einen Teil der Anlage abschalten. Derartige bekannte Anlagen weisen den Nachteil auf, dass diese vielfach fehlerhaft und in unnötiger Weise auslösen und daher Verbraucher bzw. Teilnetze abschalten, da die entsprechenden Lichtbogendetektoren hochfrequente Störungen, wie diese beim Betrieb elektrischer Maschinen entstehen können, fälschlicherweise als Lichtbogen identifizieren.

Aus der EP 1 936 768 A1, der WO 2008/077161 A1 und der US 2006/114630 A1 sind elektrische Installationsanordnungen bekannt, bei welchen die Auslösegrenzen bei Anwesenheit von Personen herabgesetzt werden.

Aufgabe der Erfindung ist es daher eine elektrische Installationsanordnung der eingangs genannten Art anzugeben, mit welcher die genannten Nachteile vermieden werden können, mit welcher Fehlabschaltungen der elektrischen Installationsanordnung verringert werden können, wobei trotzdem ein hohes Maß an Schutz erzielt werden kann.

Erfindungsgemäß wird dies durch die Merkmale des Patentanspruches 1 erreicht.

Dadurch können unnötige Netzabschaltungen verhindert und eine hohe Netzverfügbarkeit erreicht werden. Dadurch kann die Sicherheit in einem elektrischen Verbrauchernetz bedarfsorientiert gesteuert werden. Dadurch kann der Schutz vor Lichtbögen gewährleistet werden, wobei besonders empfindliche Methoden, Algorithmen bzw. Analyse- und/oder Bewertungsschemata zur Erkennung eines Lichtbogens, bzw. dessen elektrischen Folgen oder Wirkungen in dem elektrischen Verbrauchernetz, in Anwesenheit schutzwürdiger Lebewesen, insbesondere Menschen, nicht verwendet werden, da solche empfindlichen Methoden bzw. Algorithmen auch auf elektrische Verbraucher, wie etwa Elektromotore in Staubsaugern oder Bohrmaschinen, oder Dimmer, als gefährliche Lichtbögen identifizieren können, was zu Fehlausschaltungen führen kann. Durch die in Anwesenheit eines Menschen erhöhte Auslöseschwelle können Fehlauslösungen gezielt in den Zeiten verhindert werden, in welchen vermehrt mit Störungen gerechnet werden muss, welche durch einen Lichtbogendetektor fälschlicherweise als gefährlicher Lichtbogen ausgelegt werden könnten. In menschenleeren Umgebungen werden hingegen geringe Auslöseschwellen bzw. empfindliche Analyse- und/oder Bewertungsschemata angewendet, welche sehr empfindlich auf Lichtbögen reagieren, und ein sicheres und schnelles Abschalten der betreffenden Teile einer elektrischen Installationsanordnung ermöglichen, zumal in menschenleeren Umgebungen Brände, welche Installationsanordnung ermöglichen, zumal in menschenleeren Umgebungen Brände, welche etwa auch durch Lichtbögen verursacht sein können, lange unbemerkt bleiben können, und etwa aufgrund der erst spät einsetzenden Brandbekämpfung zudem einen großen Sachschaden verursachen können.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein Blockschaltbild einer ersten Ausführungsform einer erfindungsgemäßen Installationsanordnung;
Fig. 2 ein Blockschaltbild einer zweiten Ausführungsform einer erfindungsgemäßen Installationsanordnung;
Fig. 3 ein Blockschaltbild einer dritten Ausführungsform einer erfindungsgemäßen Installationsanordnung;
Fig. 4 ein Blockschaltbild einer vierten Ausführungsform einer erfindungsgemäßen Installationsanordnung;
Fig. 5 ein Blockschaltbild einer fünften Ausführungsform einer erfindungsgemäßen Installationsanordnung; und
Fig. 6 ein Blockschaltbild einer sechsten Ausführungsform einer erfindungsgemäßen Installationsanordnung.

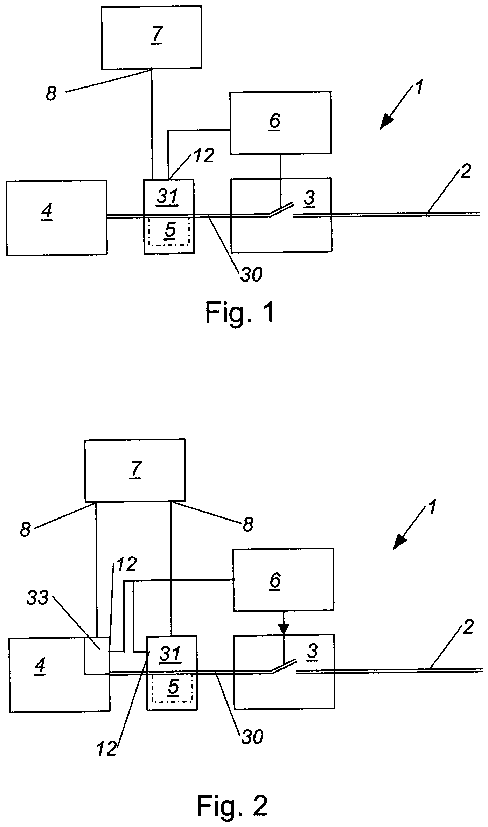

Die Fig. 1 bis 6 zeigen unterschiedliche Ausführungsformen einer elektrischen Installationsanordnung 1 zum Betrieb eines elektrischen Verbrauchernetzes 2, mit wenigstens einem ersten Schalter 3 zum vorgebbaren Trennen wenigstens eines ersten Verbrauchers 4 und/oder eines Teilnetzes 30 vom Verbrauchernetz 2, mit wenigstens einem ersten Lichtbogendetektor 31, wobei der Lichtbogendetektor 31 wenigstens einen ersten Sensor 5 zum Messen wenigstens eines ersten elektrischen Parameters in dem Verbrauchernetz 2 sowie zur Ausgabe eines ersten Messsignals umfasst, wobei der Lichtbogendetektor 31 weiters eine Analyseeinheit 6 aufweist, zur Analyse und/oder Bewertung des ersten Messsignals zufolge wenigstens eines ersten Analyse- und/oder Bewertungsschemas zum Erkennen eines Lichtbogens oder wenigstens einer elektrischen Wirkungen des Lichtbogens auf das elektrische Verbrauchernetz 2, wobei die elektrische Installationsanordnung 1 weiters wenigstens eine erste Auslöseeinheit 6 umfasst, welche bei Detektion eines Lichtbogens durch den Lichtbogendetektor 31 den ersten Schalter 3 abschaltet und derart den Verbraucher 4 und/oder das Teilnetz 30 vom Verbrauchernetz 2 trennt, wobei ein zweites Analyse- und/oder Bewertungsschema vorgesehen ist, wobei das erste Analyse- und/oder Bewertungsschema eine höhere Empfindlichkeit aufweist als das zweite Analyse- und/oder Bewertungsschema, und wobei bei Anwesenheit eines ersten Lebewesens vorgebbarer Art in einer vorgebbaren ersten Umgebung um den ersten Verbraucher 4 und/oder das Teilnetz 30 das zweite Analyse- und/oder Bewertungsschema vorgesehen ist, und dass bei Abwesenheit des ersten Lebewesens in der ersten Umgebung das erste Analyse- und/oder Bewertungsschema vorgesehen ist.

Dadurch können unnötige Netzabschaltungen verhindert und eine hohe Netzverfügbarkeit erreicht werden. Dadurch kann die Sicherheit in einem elektrischen Verbrauchernetz 2 bedarfsorientiert gesteuert werden. Dadurch kann der Schutz vor Lichtbögen gewährleistet werden, wobei besonders empfindliche Methoden, Algorithmen bzw. Analyse- und/oder Bewertungsschemata zur Erkennung eines Lichtbogens, bzw. dessen elektrischen Folgen oder Wirkungen in dem elektrischen Verbrauchernetz 2, in Anwesenheit schutzwürdiger Lebewesen, insbesondere Menschen, nicht verwendet werden, da solche empfindlichen Methoden bzw. Algorithmen auch auf elektrische Verbraucher, wie etwa Elektromotore in Staubsaugern oder Bohrmaschinen, oder Dimmer, als gefährliche Lichtbögen identifizieren können, was zu Fehlausschaltungen führen kann. Durch die in Anwesenheit eines Menschen erhöhte Auslöseschwelle können Fehlauslösungen gezielt in den Zeiten verhindert werden, in welchen vermehrt mit Störungen gerechnet werden muss, welche durch einen Lichtbogendetektor 31 fälschlicherweise als gefährlicher Lichtbogen ausgelegt werden könnten. In menschenleeren Umgebungen werden hingegen geringe Auslöseschwellen bzw. empfindliche Analyse- und/oder Bewertungsschemata angewendet, welche sehr empfindlich auf Lichtbögen reagieren, und ein sicheres und schnelles Abschalten der betreffenden Teile einer elektrischen Installationsanordnung 1 ermöglichen, zumal in menschenleeren Umgebungen Brände, welche etwa auch durch Lichtbögen verursacht sein können, lange unbemerkt bleiben können, und etwa aufgrund der erst spät einsetzenden Brandbekämpfung zudem einen großen Sachschaden verursachen können.

Erfindungsgemäße Installationsanordnungen 1 sind zum Betrieb jeder Art eines elektrischen Verbrauchernetzes 2 vorgesehen. Insbesondere sind diese für elektrische Endverbrauchernetze 2 bzw. Hausversorgungsnetze, welche beispielsweise in Europa mit Spannung von 230V/400V betrieben werden, vorgesehen. In weiterer Folge wird für Verbrauchernetz 2 die kurze Bezeichnung Netz 2 verwendet werden. Durch erfindungsgemäße Installationsanordnungen 1 können Verbraucher 4 vom Netz 2 getrennt werden, bzw. ganze Teilnetze 30, daher Teilbereiche eines Netzes 2, abgeschaltet werden. Als Teilnetz 30, wird dabei, wie in den Fig. 1 bis 6 dargestellt, der durch den ersten Schalter 30 abschaltbare und somit durch den ersten Schalter 30 geschützte Teilbereich des Netzes 2 bezeichnet. Sofern nicht anders bezeichnet, können sich die nachstehend auf das Trennen des ersten Verbrauchers 4 vom Netz 2 gerichteten Ausführungen auch auf das Trennen eines Teilnetzes 30 vom Netz 2 beziehen. Dies kann insbesondere zum Schutz von ersten Lebewesen als auch Anlagen vor elektrisch verursachten Bränden vorgesehen sein. Als sog. erste Lebewesen vorgebbarer Art bzw. schutzwürdige Lebewesen, werden dabei insbesondere Menschen, Haus- und Nutztiere bezeichnet.

Erfindungsgemäße Installationsanordnungen 1 weisen wenigstens einen ersten Schalter 3 auf, welcher wenigstens einen ersten Verbraucher 4 bzw. ein Teilnetz 30 mit dem Netz 2 verbindet bzw. vorgesehen ist diese vom Netz 2 zu trennen. Bei einem ersten Schalter 3 kann es sich um jede Art Schalter 3 handeln, welcher in der Lage ist die zu erwartenden Ströme beim Trennen eines Verbrauchers 4 vom Netz 2 - etwa auch im Kurzschlussfall - zu schalten. Insbesondere kann vorgesehen sein - und wie an späterer Stelle noch ausführlich beschrieben - dass der erste Schalter 3 als Schutzschalter 13 ausgebildet ist. Mit dem ersten Schalter 3 ist wenigstens eine erste Auslöseeinheit 6 wirkverbunden bzw. umfasst der erste Schalter 3 eine solche Auslöseeinheit 6, wodurch der erste Schalter 3 automatisch gesteuert abgeschaltet werden kann. Die erste Auslöseeinheit 6 kann dabei etwa als elektromagnetische Vorrichtung ausgebildet sein, welche elektrisch gesteuert den ersten Schalter 3 abschaltet.

Weiters umfasst eine erfindungsgemäße Installationsanordnung 1 wenigstens einen ersten Lichtbogendetektor 31 zum wenigstens mittelbaren Detektieren eines Lichtbogens oder wenigstens einer elektrischen Wirkungen des Lichtbogens auf das elektrische Verbrauchernetz 2. Der Lichtbogendetektor 31 weist wenigstens einen ersten Sensor 5 auf, zum Messen wenigstens eines ersten elektrischen Parameters in dem Verbrauchernetz 2, etwa einer Spannung und/oder einem Strom, sowie zur Ausgabe eines ersten Messsignals. Der erste Sensor 5 kann dabei als Sensor jeglich vorgebbarer Art ausgebildet sein, wobei insbesondere vorgesehen ist, dass der wenigstens eine erste Sensor 5 als Stromsensor und/oder als Spannungssensor ausgebildet ist, zur, insbesondere im Wesentlichen signalgetreuen, Aufnahme eines Strom- und/oder Spannungssignals in wenigstens einer elektrischen Leitung des elektrischen Netzes 2, wodurch die Auswirkungen eines Lichtbogens in Form von Spannungs- und/oder Stromspitzen in dem elektrischen Netz 2 gemessen bzw. detektiert werden können, um einen Lichtbogen zu erkennen. Bevorzugt ist der Sensor 5 etwa als bzw. umfassend einen Stromwandler, eine Förstersonde, einen Hallgenerator, einen Shunt-Widerstand, ein Voltmeter oder Ähnliches ausgebildet, wobei insbesondere auch die Kombination zweier oder mehrerer Sensoren 5 vorgesehen sein kann.

Die elektrische Installationsanordnung 1 umfasst weiters wenigstens eine erste Auslöseeinheit 6, welche bei Detektion eines Lichtbogens durch den Lichtbogendetektor 31 den ersten Schalter 3 abschaltet und derart den Verbraucher 4 und/oder das Teilnetz 30 vom Verbrauchernetz 2 trennt. Die wenigstens eine erste Auslöseeinheit 6 ist daher mit dem wenigstens einen ersten Schalter 3 und dem wenigstens einen ersten Lichtbogendetektor 31 wirkverbunden, insbesondere schaltungstechnisch verbunden. Zwischen der Auslöseeinheit 6 und dem Schalter 3 kann bevorzugt auch eine mechanische Übertragung eines Auslösesignals vorgesehen sein. Herkömmliche Schutzschalter weisen oftmals von außen zugängliche mechanische Schnittstellen zur externen Auslösung des betreffenden Schutzschalters auf. Der Lichtbogendetektor 31 weist weiters eine Analyseeinheit auf zur Analyse und/oder Bewertung des ersten Messsignals zufolge wenigstens eines ersten Analyse- und/oder Bewertungsschemas zum Erkennen eines Lichtbogens oder wenigstens einer elektrischen Wirkungen des Lichtbogens auf das elektrische Verbrauchernetz 2. Ein Analyse- und/oder Bewertungsschema umfasst dabei vorzugsweise wenigstens einen Lichtbogenerkennungsalgorithmus und/oder wenigstens einen Vergleichsparameter. Daher ist bevorzugt vorgesehen, dass das erste Messsignal in der Analyseeinheit mit einem Lichtbogenerkennungsalgorithmus bearbeitet bzw. verarbeitet wird, und nachfolgend mit einem Vergleichsparameter verglichen wird, wobei der Lichtbogendetektor 31 die Detektion eines Lichtbogens ausgibt sofern das durch den Lichtbogenerkennungsalgorithmus bearbeitete bzw. bewertete erste Messsignal den wenigstens einen ersten Vergleichsparameter übersteigt. Es kann jedoch auch vorgesehen sein, dass das erste Messsignal direkt mit dem wenigstens einen ersten Vergleichsparameter verglichen wird. Bevorzugt ist der wenigstens eine erste Vergleichsparameter als Set erster Vergleichsparameter ausgebildet, daher als mehrere Vergleichsparameter bzw. als Vergleichsfeld oder Vergleichsmatrix, von welchen ein Teil, eine vorgebbare Anzahl oder sämtliche erfüllt sein müssen, damit der Lichtbogendetektor 31 die Detektion eines Lichtbogens ausgibt. Der Lichtbogendetektor 31 weist einen Ausgang 12 auf, insbesondere einen Analogausgang und/oder einen Digitalausgang, welcher, bevorzugt schaltungstechnisch, mit einem Eingang der Auslöseeinheit 6 wirkverbunden ist, und zur Übertragung eines Auslösebefehls ausgebildet ist.

Erfindungsgemäß ist ein zweites Analyse- und/oder Bewertungsschema vorgesehen, wobei das erste Analyse- und/oder Bewertungsschema eine höhere Empfindlichkeit aufweist als das zweite Analyse- und/oder Bewertungsschema, wobei bei Anwesenheit eines ersten Lebewesens vorgebbarer Art in einer vorgebbaren ersten Umgebung um den ersten Verbraucher 4 und/oder das Teilnetz 30 das zweite Analyse- und/oder Bewertungsschema vorgesehen ist, und wobei bei Abwesenheit des ersten Lebewesens in der ersten Umgebung das erste Analyse- und/oder Bewertungsschema vorgesehen ist. Als Empfindlichkeit im Sinne der gegenständlichen Erfindung ist hiebei bevorzugt die Eigenschaft der Analyseeinheit bezeichnet ein bestimmtes erstes Messsignal nach dessen Analyse und/oder Bewertung durch die Analyseeinheit als Lichtbogen auszuweisen bzw. zu erkennen. Der Begriff Empfindlichkeit bezeichnet daher bevorzugt eine Empfindlichkeit hinsichtlich dem Erkennen wenigstens eines ersten Messsignals als Lichtbogen.

Neben eindeutig einem gefährlichen Lichtbogen zuordenbaren Messsignalen, wie diese etwa bei einem Blitzeinschlag oder dem Aufbau eines Lichtbogens zwischen zwei Netzleitern entstehen, erzeugen auch viele elektrische Maschinen, etwa Elektromotore oder Dimmer, in geringem Maß Funken, kleine Lichtbögen, bzw. andere elektrische Störungen, welche hinsichtlich deren Störungsmuster Ähnlichkeiten zu Lichtbögen aufweisen können. Je nach Empfindlichkeit des angewendeten Analyse- und/oder Bewertungsschemas erfolgt daher in Grenzfällen ein Zuordnen einer Störung als durch einen Lichtbogen oder eben nicht durch einen Lichtbogen hervorgerufen. Durch unterschiedliche Analyse- und/oder Bewertungsschemata kann eine erfindungsgemäße elektrische Installationsanordnung 1 daher an unterschiedliche Bedingungen angepasst werden, in welchen etwa das Vermeiden von Fehlauslösungen oder der maximale Brandschutz im Vordergrund stehen.

Hiebei kann gemäß einer einfachen Ausführungsform der gegenständlichen Erfindung vorgesehen sein, dass das erste Analyse- und/oder Bewertungsschema wenigstens einen ersten Vergleichsparameter umfasst, und dass das zweite Analyse- und/oder Bewertungsschema wenigstens einen zweiten Vergleichsparameter umfasst. Derartige Vergleichsparameter sind bevorzugt Grenzwerte deren Überschreiten die Detektion eines Lichtbogens bedeutet. Eine höhere Empfindlichkeit des ersten Analyse- und/oder Bewertungsschemas gegenüber dem zweiten Analyse- und/oder Bewertungsschema bedeutet daher, dass die ersten Vergleichsparameter geringere Grenzwerte darstellen als die zweiten Vergleichsparameter. Zum Vergleich des durch die Analyseeinheit analysierten bzw. bewerteten ersten Messsignals weist der Lichtbogendetektor 31 bevorzugt wenigstens eine erste Komparatorschaltung auf. Gemäß bevorzugter Ausführungsformen der gegenständlichen Erfindung ist vorgesehen, dass das erste Analyse- und/oder Bewertungsschema wenigstens einen ersten Lichtbogenerkennungsalgorithmus umfasst, dass das zweite Analyse- und/oder Bewertungsschema wenigstens einen zweiten Lichtbogenerkennungsalgorithmus umfasst, und dass der erste Lichtbogenerkennungsalgorithmus eine höhere Empfindlichkeit aufweist als der zweite Lichtbogenerkennungsalgorithmus. Dabei erfolgt bevorzugt durch jeden der unterschiedlich angewendeten Lichtbogenerkennungsalgorithmen eine unterschiedliche Bewertung des ersten Messsignals.

Da die Wirkungen eines Lichtbogens, wie etwa eines Blitzes oder einer Funkenstrecke, sehr gut anhand deren zeitlichen Verlaufes erkennt werden kann, ist besonders bevorzugt vorgesehen, dass der erste Sensor 5 zur Aufnahme eines zeitlichen Verlaufs des wenigstens einen ersten elektrischen Parameters ausgebildet ist, wodurch die Möglichkeit gegeben ist, anhand einer Analyse des zeitlichen Verlaufs des wenigstens einen ersten elektrischen Parameters die Auswirkungen eines Lichtbogens auf das elektrische Verbrauchernetz 2 zu erkennen, und derart auf das Auftreten eines Lichtbogens im Wirkungsbereich des elektrischen Verbrauchernetzes 2 zu schließen. Die Lichtbogenerkennungsalgorithmen sind daher bevorzugt als Algorithmen zur Manipulation des ersten Messsignals im Zeit- und/oder im Bildbereich ausgebildet.

In diesem Zusammenhang ist daher bevorzugt vorgesehen, dass die Analyseeinheit zur Analyse des ersten Messsignals im Zeitbereich und/oder im Bildbereich ausgebildet ist, und insbesondere einen Mikroprozessor, Mikrocontroller und/oder digitalen Signalprozessor aufweist. Für eine besonders sichere, effiziente und zielführende Analyse des ersten elektrischen Parameters, bzw. einer durch den ersten Sensor 5 ermittelten und den ersten elektrischen Parameter abbildenden ersten Messgröße, ist bevorzugt vorgesehen, dass die erste Messgröße als frequenzabhängiges Signal betrachtet wird und vom Zeitbereich in einen Bildbereich transformiert wird, etwa in Form einer FFT, einer Wavelet-Transformation, oder einer Laplace- Transformation, wodurch die erste Messgröße weiter analysiert werden kann, und wie vorstehend angedacht für unterschiedliche Analyse- und/oder Bewertungsschemata unterschiedliche Lichtbogenerkennungsalgorithmen vorgesehen sind.

Es kann vorgesehen sein, und wie in den Fig. 1 bis 4 dargestellt, dass der erste Lichtbogendetektor 31, die erste Auslöseeinheit 6 und/oder der erste Schalter 3 als separate Elemente ausgebildet und in einem Netzwerk angeordnet sind, bzw. zusammenwirken. Dadurch ist es beispielsweise möglich den ersten Schalter 3 von dem ersten Lichtbogendetektor 31 zu trennen, daher die erste Messgröße an einem anderen Bereich aufzunehmen als dem an dem der ersten Schalter 3 angeordnet ist. Dies kann vor allem bei mehreren Lichtbogendetektoren 31, 33 vorteilhaft sein, da sich dadurch ein umfassenderes Bild der tatsächlichen physikalischen Gegebenheiten in dem durch den ersten Schalter 3 abschaltbaren Teilnetz 30 bietet. Es kann jedoch auch vorgesehen sein, dass wenigstens zwei der vorstehend benannten Elemente in einem gemeinsamen Gehäuse angeordnet sind, und beispielsweise auch einzelne Baugruppen gemeinsam verwenden, daher dass beispielsweise nach außen nur eine Schnittstelle vorgesehen ist, und ein einzelner Buscontroller empfangene Daten auf die Elemente aufteilt. Besonders bevorzugt kann vorgesehen sein, dass der erste Lichtbogendetektor 31, die erste Auslöseeinheit 6 und der erste Schalter 3 einstückig in Form eines Schutzschalters 13 ausgebildet sind, wodurch ein besonders einfacher und kompakter Schaltungsaufbau realisiert werden kann. Die gegenständliche Erfindung betrifft daher weiters einen Schutzschalter für eine erfindungsgemäße elektrische Installationsanordnung 1, mit wenigstens einem ersten Lichtbogendetektor 31 sowie einer erste Auslöseeinheit 6, welche mit Schaltkontakten des Schutzschalters 13 wirkverbunden ist, wobei der Schutzschalter 13 zweite Mittel zur vorgebbar automatischen Anpassung eines Analyse- und/oder Bewertungsschemas aufweist.

Erfindungsgemäß ist vorgesehen, dass die Analyse- und/oder Bewertungsschemata in Abhängigkeit der An- bzw. Abwesenheit eines ersten Lebewesens vorgebbarer Art verändert bzw. angepasst werden, wobei es sich bei einem derartigen Lebewesen bevorzugt um den Menschen handelt, wobei jedoch auch Nutztiere oder Haustiere mit umfasst sein können, deren Anwesenheit in einem Bereich etwa die Aktivierung elektrischer Verbraucher verursacht, etwa automatische Fütterungsanlagen in der Tiermast. Zur Vorgabe eines Analyse- und/oder Bewertungsschemas ist daher die Kenntnis der Anwesenheit erster Lebewesen erforderlich. Eine solche Anwesenheit kann etwa manuell an einem entsprechenden Steuereingang eines Lichtbogendetektors 31, etwa in Form eines elektrischen Signals, eingegeben werden. Bevorzugt ist jedoch vorgesehen, dass die elektrische Installationsanordnung 1 wenigstens eine erste Steuer- und Kontrolleinheit 7 zur vorgebbar automatischen Anpassung des Analyse- und/oder Bewertungsschemas aufweist. Mittels einer derartigen Steuer- und Kontrolleinheit 7 kann das Analyse- und/oder Bewertungsschema an die lokalen bzw. temporären Gegebenheiten angepasst werden. Die Steuer- und Kontrolleinheit 7 kann dabei zur Anpassung des Analyse- und/oder Bewertungsschemas sämtlicher mit dieser Steuer- und Kontrolleinheit 7 wirkverbundenen Lichtbogendetektoren 31 vorgesehen sein.

Bevorzugt ist vorgesehen, dass die erste Steuer- und Kontrolleinheit 7 wenigstens eine Schaltlogik, insbesondere einen Mikroprozessor, aufweist, und zur Kommunikation mit den weiteren Elementen der elektrische Installationsanordnung, wenigstens einen Ausgang 8 und/oder vorzugsweise wenigstens einen Eingang 9, insbesondere eine Busschnittstelle 27 und/oder eine Funkschnittstelle, aufweist, wobei der Ausgang 8 bzw. der Eingang 9 sowohl als Digital- und/oder Analogausgang bzw. -eingang ausgebildet sein kann, bzw. jede Art einer Busschnittstelle 27 vorgesehen sein kann. Bevorzugt ist vorgesehen, dass die unterschiedlichen Analyse- und/oder Bewertungsschemata in einem Lichtbogendetektor 31 gespeichert sind, und durch einen Befehl der Steuer- und Kontrolleinheit 7 ein bestimmtes Analyse- und/oder Bewertungsschema ausgewählt und aktiviert bzw. geladen wird. Es kann jedoch auch vorgesehen sein, wenigstens ein vollständiges Analyse- und/oder Bewertungsschema mittels der Steuer- und Kontrolleinheit 7 in den wenigstens einen Lichtbogendetektor 31 zu laden.

Bei besonders einfach ausgeführten elektrischen Installationsanordnungen 1, wie diese etwa in den Fig. 1 bis 3 dargestellt sind, kann bevorzugt vorgesehen sein, dass die erste Steuer- und Kontrolleinheit 7 die Analyse- und/oder Bewertungsschemata in Abhängigkeit der Zeit steuert. Dies ist vor allem bei elektrischen Installationsanlagen 1 vorteilhaft, welche in Bereichen angeordnet sind, welchen strengen temporären Zugangsbeschränkungen unterliegen, wie etwa zeitgesteuerte Tresoranlagen bzw. öffentliche Gebäude wie etwa Schulen, U-Bahn-Bereiche oder Museen. Es ist daher bei derartigen Ausführungsformen vorgesehen, dass die erste Steuer- und Kontrolleinheit 7 wenigstens eine Uhr, insbesondere eine Zeitschaltuhr, zur automatischen und zeitgesteuerten Anpassung des Analyse- und/oder Bewertungsschemas umfasst.

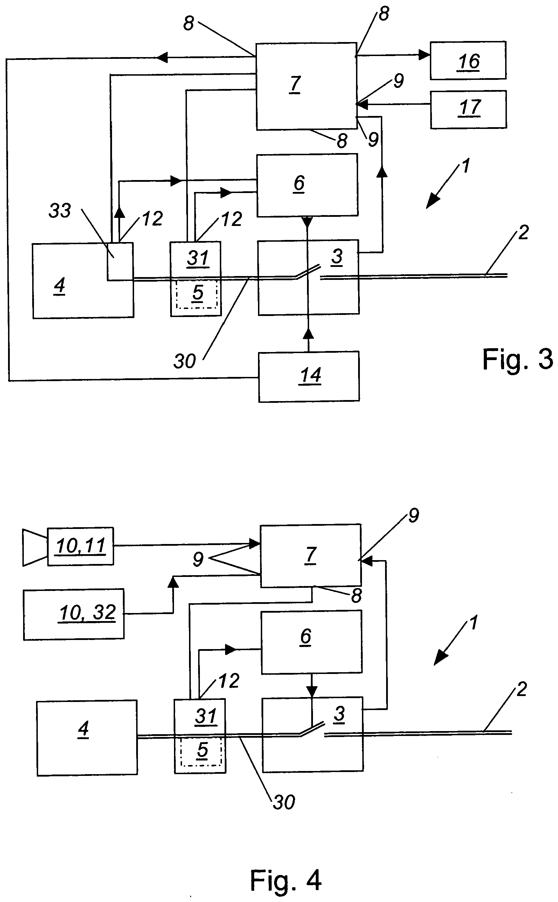

Fig. 1 zeigt eine Basisanordnung einer erfindungsgemäßen elektrischen Installationsanordnung 1, wobei der erste Lichtbogendetektor 31 etwa als Stromsensor ausgebildet ist. Der erste Verbraucher 4 kann, wie in sämtlichen in den Fig. 1 bis 6 dargestellten Ausführungsformen, nicht nur ein einzelner erster Verbraucher 4 sein, vielmehr kann es sich dabei um eine vorgebbare Anzahl an Verbrauchern 4 handeln. Weiters wird durch die erfindungsgemäße elektrische Installationsanordnung 1 auch das wenigstens eine Teilnetz 30 geschützt, an das, insbesondere mittels bekannter Steckverbindungen, weitere Verbraucher 4 anschließbar sind. Die Ausführungsform gemäß Fig. 2 umfasst zusätzlich einen zweiten Lichtbogendetektor 33, welcher direkt an dem ersten Verbraucher 4 angeordnet ist, und direkt an diesem ersten Verbraucher 4 erste elektrische Parameter aufnimmt. Fig. 3 zeigt eine Ausführungsform, welche zusätzlich zu den Merkmalen der Ausführungsform gemäß Fig. 2 eine Statusmeldung des ersten Schaltgeräts 3 an die Steuer- und Kontrolleinheit 7 mittels einer entsprechenden Verbindung vorsieht, und wobei ein durch die erste Steuer- und Kontrolleinheit 7 steuerbares erstes Einschaltgerät 14 mit dem ersten Schalter 3 wirkverbunden ist, wodurch das erste Schaltgerät 3 nach dem Abschalten auch wieder eingeschaltet werden kann. Zusätzlich ist mit der Steuer- und Kontrolleinheit 7 eine Anzeige 16 und eine Eingabevorrichtung 17 verbunden, sodass auch direkte Steuerbefehle an die Steuer- und Kontrolleinheit 7 übermittelt werden können, wobei diese Verbindung sowohl leitungsgebunden als auch drahtlos ausgeführt sein kann.

Insbesondere bei Bereichen, welche zeitlich unregelmäßig von Menschen und/oder schutzwürdigen Tieren frequentiert werden, ist es vorteilhaft, wenn die elektrische Installationsanlage 1 das Analyse- und/oder Bewertungsschema in Abhängigkeit der Anwesenheit erster Lebewesen in einer vorgebbaren ersten Umgebung um den ersten Verbraucher 4 bzw. das Teilnetz 30 steuert. Dadurch ist es möglich das Analyse- und/oder Bewertungsschema gezielt an anwesende Menschen oder andere schutzwürdige Lebewesen anzupassen, bzw. auch gezielt an die lokalen Gegebenheiten. Dadurch können Fehlauslösungen aufgrund detektierter Lichtbögen vermieden werden, wenn erste Lebewesen zugegen sind, wodurch Fehlabschaltungen des Netzes 2 während dessen Nutzug durch die ersten Lebewesen vermieden werden, während in deren Abwesenheit der volle Schutz gegen jede Art von Lichtbögen gewährleist ist, wodurch auch der Brandschutz in besonderem Maße gewährleistet ist, wobei Fehlabschaltungen elektrischer Anlagen in diesen Zeiten gering sind, da insbesondere viele der Fehlauslösungen verursachenden Maschinen in der Regel nur in Anwesenheit von Menschen und/oder Nutztieren in Betrieb sind.

Zur Steuerung bzw. Anpassung des ersten Analyse- und/oder Bewertungsschemas durch die Steuer- und Kontrolleinheit 7 ist daher bevorzugt vorgesehen, dass diese wenigstens ein erstes Mittel 10 zur Feststellung der Anwesenheit des ersten Lebewesens, in der ersten Umgebung aufweist, wobei sich diese erste Umgebung, wie vorstehend bereits dargelegt, auch auf ein vollständiges Teilnetz 30, welches beispielsweise einen Raum bzw. ein Gebäude versorgen bzw. durchziehen kann, erstrecken kann, bzw. auch nur die unmittelbar und nächste Umgebung um einen Verbraucher 4 betreffen kann. Das wenigstens eine erste Mittel 10 ist weiters zur Übermittlung von Anwesenheitsdaten an die erste Steuer- und Kontrolleinheit 7 ausgebildet, wobei die Anwesenheitsdaten ein Steuerparameter zur vorgebbaren und automatischen Anpassung des Analyse- und/oder Bewertungsschemas sind. Die ersten Mittel 10 weisen daher wenigstens einen Ausgang bzw. eine Busschnittstelle zur Übermittlung der Anwesenheitsdaten an die Steuer- und Kontrolleinheit 7 auf.

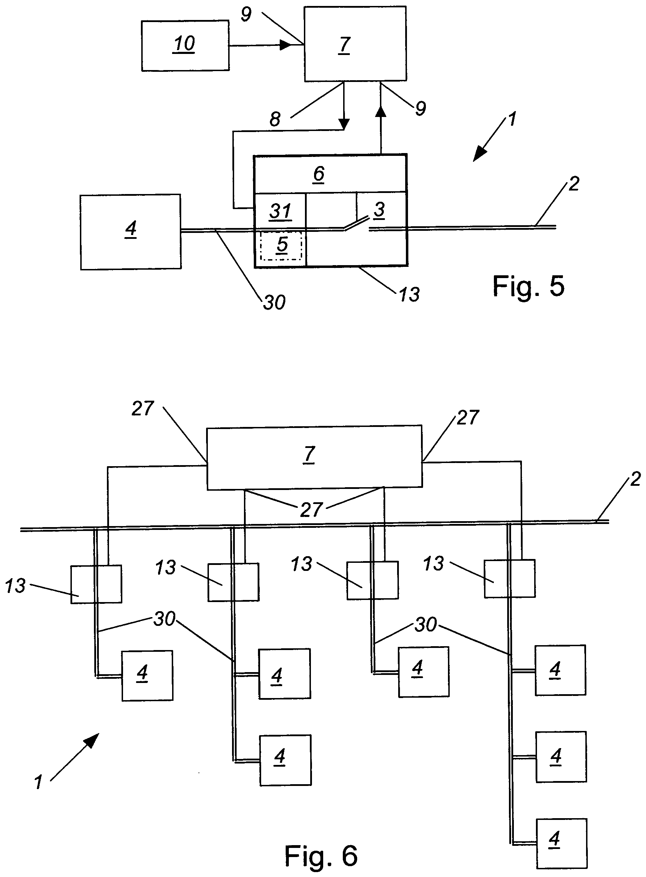

Die ersten Mittel 10 zur Feststellung der Anwesenheit eines ersten Lebewesens vorgebbarer Art können als jede Art Sensor ausgebildet sein, welcher auf die Anwesenheit eines ersten Lebewesens vorgebbarer Art in der ersten Umgebung reagiert bzw. eine reproduzierbare Veränderung anzeigt. Bevorzugt ist vorgesehen, dass das erste Mittel 10 zur Feststellung der Anwesenheit eines ersten Lebewesens vorgebbarer Art als Kamera 11, Infrarotsensor, Bewegungsmelder, Vibrationsaufnehmer, Lichtschranke und/oder Mikrophon ausgebildet ist. Dadurch kann wenigstens die Anwesenheit eines Lebewesens vorgebbarer Art in der ersten Umgebung detektiert werden, und dementsprechend können durch die Steuer- und Kontrolleinheit 7 die Analyse- und/oder Bewertungsschemata im Hinblick auf eine höchstmögliche Systemverfügbarkeit bzw. Netzverfügbarkeit bei höchstmöglichem Schutz der ersten Lebewesen angepasst werden. Alternativ bzw. zusätzlich hiezu kann vorgesehen sein, dass das erste Mittel 10 zur Feststellung der Anwesenheit eines ersten Lebewesens wenigstens einen Funkempfänger 32, insbesondere einen RFID-Empfänger, umfassen. Dadurch kann ohne zusätzliche Anmeldung eines Lebewesens das Betreten eines Bereichs durch ein Lebewesen, welches einen entsprechenden Sender, etwa einen RFID-Chip bzw. RFID-Tag, bei sich trägt, oder ein entsprechendes Implantat aufweist, erkannt werden, dass ein entsprechendes Lebewesen zugegen ist. Die Fig. 4 und 5 zeigen einfache Ausführungsformen derartiger elektrischer Installationsanordnungen 1, wobei die Ausführungsform gemäß Fig. 4 ein erstes Mittel 10 in Form einer Kamera 11 umfasst, und bei der Ausführungsform gemäß Fig. 5, wie vorstehend bereits beschrieben, die erste Auslöseeinheit 6, der erste Schalter 3 und der erste Lichtbogendetektor 31 einstückig als Schutzschalter 13 ausgeführt sind. Fig. 6 zeigt in schematischer Darstellung eine elektrische Installationsanlage 1 mit vier Schutzschaltern 13, an welche jeweils wenigstens ein erster Verbraucher 4 angeschlossen ist. Wie dargestellt, wird durch den Schutzschalter 13 dabei jeweils das gesamte nachfolgende Teilnetz 30 geschützt.

Beim Betrieb einer erfindungsgemäßen elektrischen Installationsanordnung 1, insbesondere zum Schutz der elektrischen Installationsanordnung 1 vor lichtbogenverursachten Bränden, vorzugsweise gemäß der vorstehenden Beschreibung, ist vorgesehen, dass wenigstens ein erster Lichtbogendetektor 31 wenigstens einen ersten elektrischen Parameter in dem Verbrauchernetz 2 misst, und ein derart ermitteltes erstes Messsignal wenigstens zufolge eines ersten Analyse- und/oder Bewertungsschemas analysiert bzw. bewertet wird, wobei beim Detektieren eines Lichtbogens durch wenigstens eine erste Auslöseeinheit 6 wenigstens ein erster Schalter 3 abgeschaltet wird und derart ein Verbraucher 4 und/oder ein Teilnetz 30 vom Verbrauchernetz 2 getrennt wird, wobei bei Anwesenheit eines ersten Lebewesens vorgebbarer Art in einer vorgebbaren ersten Umgebung um den ersten Verbraucher 4 und/oder das Teilnetz 30 ein zweites Analyse- und/oder Bewertungsschema vorgegeben wird, wobei das erste Analyse- und/oder Bewertungsschema eine höhere Empfindlichkeit aufweist als das zweite Analyse- und/oder Bewertungsschema, und wobei bei Abwesenheit des ersten Lebewesens in der ersten Umgebung das erste Analyse- und/oder Bewertungsschema vorgegeben wird. Neben der Möglichkeit der zeitlich vorgebbaren und automatischen Anpassung des Analyse- und/oder Bewertungsschemas, ist dabei insbesondere vorgesehen, dass durch die elektrische Installationsanordnung 1 die Anwesenheit eines ersten Lebewesens vorgebbarer Art, in einer vorgebbaren ersten Umgebung um den ersten Verbraucher 4 bzw. das Teilnetz 30 detektiert wird.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Elektrische Installationsanordnung (1) zum Betrieb eines elektrischen Verbrauchernetzes (2), mit wenigstens einem ersten Schalter (3) zum vorgebbaren Trennen wenigstens eines ersten Verbrauchers (4) und/oder eines Teilnetzes (30) vom Verbrauchernetz (2), wobei die elektrische Installationsanordnung (1) weiters wenigstens eine erste Auslöseeinheit (6) umfasst,
**dadurch gekennzeichnet, dass** die elektrische Installationsanordnung (1) wenigstens einem ersten Lichtbogendetektor (31) aufweist, dass der Lichtbogendetektor (31) wenigstens einen ersten Sensor (5) zum Messen wenigstens eines ersten elektrischen Parameters in dem Verbrauchernetz (2) sowie zur Ausgabe eines ersten Messsignals umfasst, dass der Lichtbogendetektor (31) weiters eine Analyseeinheit aufweist zur Analyse und/oder Bewertung des ersten Messsignals zufolge wenigstens eines ersten Analyse- und/oder Bewertungsschemas zum Erkennen eines Lichtbogens oder wenigstens einer elektrischen Wirkungen des Lichtbogens auf das elektrische Verbrauchernetz (2),
dass ein zweites Analyse- und/oder Bewertungsschema vorgesehen ist, dass das erste Analyse- und/oder Bewertungsschema, eine höhere Empfindlichkeit aufweist als das zweite Analyse- und/oder Bewertungsschema,
dass bei Anwesenheit eines ersten Lebewesens vorgebbarer Art in einer vorgebbaren ersten Umgebung um den ersten Verbraucher (4) und/oder das Teilnetz (30) das zweite Analyse- und/oder Bewertungsschema vorgesehen ist, dass bei Abwesenheit des ersten Lebewesens in der ersten Umgebung das erste Analyse- und/oder Bewertungsschema vorgesehen ist,
dass die erste Auslöseeinheit (6) bei Detektion eines Lichtbogens durch den Lichtbogendetektor (31) den ersten Schalter (3) abschaltet und derart den Verbraucher (4) und/oder das Teilnetz (30) vom Verbrauchernetz (2) trennt.

2. Elektrische Installationsanordnung (1) nach Anspruch 1, **dadurch gekennzeichnet, dass** der wenigstens eine erste Sensor (5) als Stromsensor und/oder als Spannungssensor ausgebildet ist, zur, insbesondere im Wesentlichen signalgetreuen, Aufnahme eines Strom- und/oder Spannungssignals.

3. Elektrische Installationsanordnung (1) nach Anspruch 1 oder 2, **dadurch gekennzeichnet, dass** der erste Sensor (5) zur Aufnahme eines zeitlichen Verlaufs des wenigstens einen ersten elektrischen Parameters ausgebildet ist.

4. Elektrische Installationsanordnung (1) nach einem der Ansprüche 1 bis 3, **dadurch gekennzeichnet, dass** die Analyseeinheit zur Analyse des ersten Messsignals im Zeitbereich und/oder im Bildbereich ausgebildet ist, und insbesondere einen Mikroprozessor, Mikrocontroller und/oder digitalen Signalprozessor aufweist.

5. Elektrische Installationsanordnung (1) nach einem der Ansprüche 1 bis 4, **dadurch gekennzeichnet, dass** das erste Analyse- und/oder Bewertungsschema wenigstens einen ersten Lichtbogenerkennungsalgorithmus umfasst, dass das zweite Analyse- und/oder Bewertungsschema wenigstens einen zweiten Lichtbogenerkennungsalgorithmus umfasst, und dass der erste Lichtbogenerkennungsalgorithmus eine höhere Empfindlichkeit aufweist als der zweite Lichtbogenerkennungsalgorithmus.

6. Elektrische Installationsanordnung (1) nach einem der Ansprüche 1 bis 5, **dadurch gekennzeichnet, dass** das erste Analyse- und/oder Bewertungsschema wenigstens einen ersten Vergleichsparameter umfasst, dass das zweite Analyse- und/oder Bewertungsschema wenigstens einen zweiten Vergleichsparameter umfasst.

7. Elektrische Installationsanordnung (1) nach einem der Ansprüche 1 bis 6, **dadurch gekennzeichnet, dass** der erste Lichtbogendetektor (31), die erste Auslöseeinheit (6) und der erste Schalter (3) einstückig in Form eines ersten Schutzschalters (13) ausgebildet sind.

8. Elektrische Installationsanordnung (1) nach einem der Ansprüche 1 bis 7, **dadurch gekennzeichnet, dass** die elektrische Installationsanordnung (1) wenigstens eine erste Steuer- und Kontrolleinheit (7) zur vorgebbar automatischen Anpassung des Analyse- und/oder Bewertungsschemas aufweist.

9. Elektrische Installationsanordnung (1) nach Anspruch 8, **dadurch gekennzeichnet, dass** die erste Steuer- und Kontrolleinheit (7) wenigstens eine Uhr, insbesondere eine Zeitschaltuhr, zur automatischen und zeitgesteuerten Anpassung des Analyse- und/oder Bewertungsschemas umfasst.

10. Elektrische Installationsanordnung (1) nach Anspruch 8 oder 9, **dadurch gekennzeichnet, dass** diese wenigstens ein erstes Mittel (10) zur Feststellung der Anwesenheit des ersten Lebewesens, in der ersten Umgebung aufweist, welches zur Übermittlung von Anwesenheitsdaten an die erste Steuer- und Kontrolleinheit (7) ausgebildet ist.

11. Elektrische Installationsanordnung (1) nach Anspruch 10, **dadurch gekennzeichnet, dass** das erste Mittel (10) zur Feststellung der Anwesenheit eines ersten Lebewesens als Kamera (11), Infrarotsensor, Bewegungsmelder, Vibrationsaufnehmer, Lichtschranke und/oder Mikrophon ausgebildet ist.

12. Elektrische Installationsanordnung (1) nach Anspruch 10 oder 11, **dadurch gekennzeichnet, dass** das erste Mittel (10) zur Feststellung der Anwesenheit eines ersten Lebewesens wenigstens einen Funkempfänger (32), insbesondere einen RFID-Empfänger, umfassen.

13. Schutzschalter für eine elektrische Installationsanordnung nach einem der Ansprüche 1 bis 12, mit wenigstens einem ersten Lichtbogendetektor (31) sowie einer erste Auslöseeinheit (6), welche mit Schaltkontakten des Schutzschalters (13) wirkverbunden ist, **dadurch gekennzeichnet, dass** der Schutzschalter (13) zweite Mittel zur vorgebbar automatischen Anpassung eines Analyse- und/oder Bewertungsschemas aufweist.

14. Verfahren zum Betrieb einer elektrischen Installationsanordnung (1), insbesondere zum Schutz der elektrischen Installationsanordnung (1) vor lichtbogenverursachten Bränden, vorzugsweise nach einem der Ansprüche 1 bis 12, wobei wenigstens ein erster Lichtbogendetektor (31) wenigstens einen ersten elektrischen Parameter in dem Verbrauchernetz (2) misst, und ein derart ermitteltes erstes Messsignal wenigstens zufolge eines ersten Analyse- und/oder Bewertungsschemas analysiert bzw. bewertet, wobei beim Detektieren eines Lichtbogens durch wenigstens eine erste Auslöseeinheit (6) wenigstens ein erster Schalter (3) abgeschaltet wird und derart ein Verbraucher (4) und/oder ein Teilnetz (30) vom Verbrauchernetz (2) getrennt wird, wobei bei Anwesenheit eines ersten Lebewesens vorgebbarer Art in einer vorgebbaren ersten Umgebung um den ersten Verbraucher (4) und/oder das Teilnetz (30) ein zweites Analyse- und/oder Bewertungsschema vorgegeben wird, wobei bei Abwesenheit des ersten Lebewesens in der ersten Umgebung das erste Analyse- und/oder Bewertungsschema vorgegeben wird, wobei das erste Analyse- und/oder Bewertungsschema eine höhere Empfindlichkeit aufweist als das zweite Analyse- und/oder Bewertungsschema.

15. Verfahren nach Anspruch 14, **dadurch gekennzeichnet, dass** die Anwesenheit des ersten Lebewesens vorgebbarer Art in der vorgebbaren ersten Umgebung bestimmt wird.

## Claims

1. Electrical installation arrangement (1) for operating an electrical consumer network (2), having at least one first switch (3) for predeterminably disconnecting at least one first consumer (4) and/or a partial network (30) from the consumer network (2), wherein the electrical installation arrangement (1) further comprises at least one first tripping unit (6),
**characterised in that** the electrical installation arrangement (1)
has at least one first arc detector (31), that the arc detector (31) comprises at least one first sensor (5) for measuring at least one first electrical parameter in the consumer network (2) and for the output of a first measuring signal, that the arc detector (31) further has an analysis unit for analysing and/or evaluating the first measuring signal according to at least one first analysis and/or evaluation scheme for recognising an arc or at least an electrical effects of the arc on the electrical consumer network (2),
that a second analysis and/or evaluation scheme is provided, that the first analysis and/or evaluation scheme has a higher sensitivity than the second analysis and/or evaluation scheme,
that the second analysis and/or evaluation scheme is provided if a first living being of a predeterminable type is present in a predeterminable first surrounding area around the first consumer (4) and/or the partial network (30), that the first analysis and/or evaluation scheme is provided if the first living being is absent in the first surrounding area,
that first tripping unit (6), upon detection of an arc by the arc detector (31), switches off the first switch (3) and thereby disconnects the consumer (4) and/or the partial network (30) from the consumer network (2).

2. Electrical installation arrangement (1) according to claim 1, **characterised in that** the at least one first sensor (5) is designed as a current sensor and/or voltage sensor for recording a current signal and/or voltage signal, in particular in a manner substantially true to the signal.

3. Electrical installation arrangement (1) according to claim 1 or 2, **characterised in that** the first sensor (5) is designed to record a progression over time of the at least one first electrical parameter.

4. Electrical installation arrangement (1) according to any of claims 1 to 3, **characterised in that** the analysis unit is designed to analyse the first measuring signal in the time domain and/or in the image domain and in particular comprises a microprocessor, microcontroller and/or digital signal processor.

5. Electrical installation arrangement (1) according to any of claims 1 to 4, **characterised in that** the first analysis and/or evaluation scheme comprises at least one first arc recognition algorithm, that the second analysis and/or evaluation scheme comprises at least one second arc recognition algorithm, and that the first arc recognition algorithm has a higher sensitivity than the second arc recognition algorithm.

6. Electrical installation arrangement (1) according to any of claims 1 to 5, **characterised in that** the first analysis and/or evaluation scheme comprises at least one first comparison parameter, that the second analysis and/or evaluation scheme comprises at least one second comparison parameter.

7. Electrical installation arrangement (1) according to any of claims 1 to 6, **characterised in that** the first arc detector (31), the first tripping unit (6) and the first switch (3) are designed integrally in the form of a first circuit breaker (13).

8. Electrical installation arrangement (1) according to any of claims 1 to 7, **characterised in that** the electrical installation arrangement (1) has at least one first control and checking unit (7) for the predeterminable automatic adjustment of the analysis and/or evaluation scheme.

9. Electrical installation arrangement (1) according to claim 8, **characterised in that** the first control and checking unit (7) comprises at least one clock, in particular a time switch, for the automatic and time-controlled adjustment of the analysis and/or evaluation scheme.

10. Electrical installation arrangement (1) according to claim 8 or 9, **characterised in that** it has at least one first means (10) for determining the presence of the first living being in the first surrounding area, which means is designed to transmit presence data to the first control and checking unit (7).

11. Electrical installation arrangement (1) according to claim 10, **characterised in that** the first means (10) for determining the presence of a first living being is designed as a camera (11), infrared sensor, motion detector, vibration sensor, light barrier and/or microphone.

12. Electrical installation arrangement (1) according to claim 10 or 11, **characterised in that** the first means (10) for determining the presence of a first living being comprises at least one radio receiver (32), in particular an RFID receiver.

13. Circuit breaker for an electrical installation arrangement according to any of claims 1 to 12, having at least one first arc detector (31) and a first tripping unit (6) which is operatively connected to switching contacts of the circuit breaker (13), **characterised in that** the circuit breaker (13) has second means for the predeterminable automatic adjustment of an analysis and/or evaluation scheme.

14. Method for operating an electrical installation arrangement (1), in particular for protecting the electrical installation arrangement (1) from arc-induced fires, preferably according to any of claims 1 to 12, wherein at least one first arc detector (31) measures at least one first electrical parameter in the consumer network (2), and a first measuring signal determined in this manner is analysed and evaluated at least according to a first analysis and/or evaluation scheme, wherein at least one first switch (3) is switched off upon detection of an arc by at least one first tripping unit (6), and a consumer (4) and/or a partial network (30) is disconnected in this manner from the consumer network (2), wherein a second analysis and/or evaluation scheme is predetermined if a first living being of a predeterminable type is present in a predeterminable first surrounding area around the first consumer (4) and/or the partial network (30), wherein the first analysis and/or evaluation scheme is predetermined if the first living being is absent in the first surrounding area, wherein the first analysis and/or evaluation scheme has a higher sensitivity than the second analysis and/or evaluation scheme.

15. Method according to claim 14, **characterised in that** the presence of the first living being of a predeterminable type is determined in the predeterminable first surrounding area.

## Revendications

1. Dispositif d'installation électrique (1) pour faire fonctionner un réseau consommateur électrique (2), avec au moins un premier interrupteur (3) destiné à séparer du réseau consommateur (2), d'une manière pouvant être prescrite, au moins un premier consommateur (4) et/ou un réseau partiel (30),
dans lequel le dispositif d'installation électrique (1) comprend en outre au moins une première unité de déclenchement (6),
**caractérisé**
**en ce que** le dispositif d'installation électrique (1) comporte au moins un premier détecteur d'arc électrique (31), **en ce que** le détecteur d'arc électrique (31) comprend au moins un premier capteur (5) destiné à la mesure d'au moins un premier paramètre électrique dans le réseau consommateur (2) ainsi qu'à la fourniture d'un premier signal de mesure,
**en ce que** le détecteur d'arc électrique (31) comporte en outre une unité d'analyse destinée à l'analyse et/ou à l'évaluation du premier signal de mesure conformément à au moins un premier schéma d'analyse et/ou d'évaluation destiné à la reconnaissance d'un arc électrique ou au moins d'un effets électrique de l'arc électrique sur le réseau consommateur électrique (2),
**en ce qu'**un deuxième schéma d'analyse et/ou d'évaluation est prévu, **en ce que** le premier schéma d'analyse et/ou d'évaluation présente une plus grande sensibilité que le deuxième schéma d'analyse et/ou d'évaluation,
**en ce que**, en présence d'un premier être vivant d'une nature pouvant être prescrite dans un premier environnement pouvant être prescrit autour du premier consommateur (4) et/ou du réseau partiel (30), le deuxième schéma d'analyse et/ou d'évaluation est prévu, **en ce que**, en l'absence du premier être vivant dans le premier environnement, le premier schéma d'analyse et/ou d'évaluation est prévu,
**en ce que**, lors de la détection d'un arc électrique par le détecteur d'arc électrique (31), la première unité de déclenchement (6) coupe le premier interrupteur (3) et sépare ainsi le consommateur (4) et/ou le réseau partiel (30) du réseau consommateur (2).

2. Dispositif d'installation électrique (1) selon la revendication 1, **caractérisé en ce que** l'au moins un premier capteur (5) est réalisé sous forme de capteur de courant et/ou de capteur de tension en vue de l'enregistrement, en particulier globalement fidèle au signal, d'un signal de courant et/ou de tension.

3. Dispositif d'installation électrique (1) selon la revendication 1 ou 2, **caractérisé en ce que** le premier capteur (5) est conçu pour l'enregistrement d'une allure temporelle de l'au moins un premier paramètre électrique.

4. Dispositif d'installation électrique (1) selon l'une quelconque des revendications 1 à 3, **caractérisé en ce que** l'unité d'analyse est conçue pour l'analyse du premier signal de mesure dans le domaine temporel et/ou dans le domaine des images, et comporte en particulier un microprocesseur, un microcontrôleur et/ou un processeur de signal numérique.

5. Dispositif d'installation électrique (1) selon l'une quelconque des revendications 1 à 4, **caractérisé en ce que** le premier schéma d'analyse et/ou d'évaluation comprend au moins un premier algorithme de reconnaissance d'arc électrique, **en ce que** le deuxième schéma d'analyse et/ou d'évaluation comprend au moins un deuxième algorithme de reconnaissance d'arc électrique, et en **en ce que** le premier algorithme de reconnaissance d'arc électrique présente une plus grande sensibilité que le deuxième algorithme de reconnaissance d'arc électrique.

6. Dispositif d'installation électrique (1) selon l'une quelconque des revendications 1 à 5, **caractérisé en ce que** le premier schéma d'analyse et/ou d'évaluation comprend au moins un premier paramètre de comparaison, **en ce que** le deuxième schéma d'analyse et/ou d'évaluation comprend au moins un deuxième paramètre de comparaison.

7. Dispositif d'installation électrique (1) selon l'une quelconque des revendications 1 à 6, **caractérisé en ce que** le premier détecteur d'arc électrique (31), la première unité de déclenchement (6) et le premier interrupteur (3) sont réalisés d'une seule pièce sous la forme d'un premier disjoncteur (13).

8. Dispositif d'installation électrique (1) selon l'une quelconque des revendications 1 à 7, **caractérisé en ce que** le dispositif d'installation électrique (1) comporte au moins une première unité de commande et de contrôle (7) destinée à l'adaptation automatique, pouvant être prescrite, du schéma d'analyse et/ou d'évaluation.

9. Dispositif d'installation électrique (1) selon la revendication 8, **caractérisé en ce que** la première unité de commande et de contrôle (7) comprend au moins une horloge, en particulier une minuterie, en vue de l'adaptation, automatique et par commande temporelle, du schéma d'analyse et/ou d'évaluation.

10. Dispositif d'installation électrique (1) selon la revendication 8 ou 9, **caractérisé en ce qu'**il comporte au moins un premier moyen (10) destiné à constater la présence du premier être vivant dans le premier environnement, lequel premier moyen est conçu pour transmettre des données de présence à la première unité de commande et de contrôle (7).

11. Dispositif d'installation électrique (1) selon la revendication 10, **caractérisé en ce que** le premier moyen (10) destiné à constater la présence d'un premier être vivant est réalisé sous forme de caméra (11), de capteur infrarouge, de détecteur de mouvement, de capteur de vibration, de barrière photoélectrique et/ou de microphone.

12. Dispositif d'installation électrique (1) selon la revendication 10 ou 11, **caractérisé en ce que** le premier moyen (10) destiné à constater la présence d'un premier être vivant comprend un récepteur radio (32), en particulier un récepteur RFID.

13. Disjoncteur pour un dispositif d'installation électrique (1) selon l'une quelconque des revendications 1 à 12, avec au moins un premier détecteur d'arc électrique (31) ainsi qu'une première unité de déclenchement (6), qui est reliée pour agir à des contacts commutateurs du disjoncteur (13), **caractérisé en ce que** le disjoncteur (13) comporte des deuxièmes moyens destinés à l'adaptation automatique, pouvant être prescrite, du schéma d'analyse et/ou d'évaluation.

14. Procédé pour faire fonctionner un dispositif d'installation électrique (1), en particulier pour protéger le dispositif d'installation électrique (1) contre des incendies dus à des arcs électriques, de préférence selon l'une quelconque des revendications 1 à 12, dans lequel au moins un premier détecteur d'arc électrique (31) mesure au moins un premier paramètre électrique dans le réseau consommateur (2), et analyse ou évalue un premier signal de mesure ainsi déterminé au moins conformément à un premier schéma d'analyse et/ou d'évaluation, dans lequel, lors de la détection d'un arc électrique, au moins un premier interrupteur (3) est coupé par au moins une première unité de déclenchement (6) et un consommateur (4) et/ou un réseau partiel (30) est ainsi séparé du réseau consommateur (2), dans lequel, en présence d'un premier être vivant d'une nature pouvant être prescrite dans un premier environnement pouvant être prescrit autour du premier consommateur (4) et/ou du réseau partiel (30), un deuxième schéma d'analyse et/ou d'évaluation est prescrit, dans lequel, en l'absence du premier être vivant dans le premier environnement, le premier schéma d'analyse et/ou d'évaluation est prescrit, dans lequel le premier schéma d'analyse et/ou d'évaluation présente une plus grande sensibilité que le deuxième schéma d'analyse et/ou d'évaluation.

15. Procédé selon la revendication 14, **caractérisé en ce que** la présence du premier être vivant d'une nature pouvant être prescrite dans le premier environnement pouvant être prescrit est déterminée.
